# EUROPEAN PATENT SPECIFICATION

(11) **EP 4 219 959 B1**
(45) Date of publication and mention of the grant of the patent: **25.11.2026**
(21) Application number: 23153809.1
(22) Date of filing: 27.01.2023
(51) Int. Cl.: F15D 1/10, F15D 1/02, F15D 1/00, F15D 1/12, A61F 2/00, B64C 23/00, C22F 1/00, A61B 17/00

(54) **FLOW CONTROL DEVICE**
DURCHFLUSS-KONTROLLGERÄT
DISPOSITIF DE CONTROLE DE DÉBIT

(30) Priority: 27.01.2022 US 202263303581 P
(43) Date of publication of application: 02.08.2023
(73) Proprietor: Hamilton Sundstrand Corporation, Charlotte, NC 28217-4578 (US)
(72) Inventor: KILCHYK, Viktor, Lancaster, NY (US)
(74) Representative: Dehns

(56) References cited:
- EP-A1- 4 177 440
- US-A1- 2010 089 468
- US-A1- 2012 255 278
- US-A1- 2013 255 796
- US-A1- 2014 157 769
- US-A1- 2015 235 920
- US-A1- 2018 038 513

## Description

### BACKGROUND

The invention relates to flow control devices. Flow control devices are disclosed in US 2018/038513 A1, US 2010/089468 A1, US 2012/255278 A1, US 2014/157769 A1 and US 2015/235920 A1.

### BRIEF DESCRIPTION

Disclosed herein is a flow control device as defined by claim 1.

In another embodiment, the repeat unit repeats itself throughout a volume of an article.

In yet another embodiment, the plurality of structural units is periodically spaced.

In yet another embodiment, the first portion and the second portion each have domain sizes ranging from 10 micrometers to 20 millimeters and are placed in position using additive manufacturing.

In yet another embodiment, the first portion and the second portion both comprise a single shape memory alloy.

Disclosed herein is a flow control device as defined by claim 6.

In an embodiment, the planar or curved surface can change from hydrophobic to hydrophilic or vice versa.

In another embodiment, a frictional property of the planar or curved surface can be changed upon the application of a stimulus.

### BRIEF DESCRIPTION OF THE DRAWINGS

The following descriptions should not be considered limiting in any way. With reference to the accompanying drawings, like elements are numbered alike:
FIG. 1 is a depiction of different shapes manufactured from shape memory alloys when subjected to a temperature change;
FIG. 2 is a schematic depiction of an article that comprises two different portions where each portion displays a different property value when subjected to a change in ambient conditions;
FIG. 3 is a schematic depiction of the behavior of the article of FIG. 2 when subjected to a change in temperature;
FIG. 4 is a schematic depiction of the behavior of an article in the shape of a circle when subjected to a change in temperature;
FIG. 5A is a schematic depiction of the behavior of an article when subjected to change in temperature;
FIG. 5B is a schematic depiction of the behavior of an article when subjected to change in temperature;
FIG. 6A depicts the article where the structural units are combined in a random fashion to form a composite unit;
FIG. 6B depicts the structural units having a random shape but are uniformly distributed;
FIG. 6C depicts the structural units having a uniform distribution in all directions.
FIG. 7A depicts an airfoil made from the structural units detailed in the FIG. 6C; and
FIG. 7B depicts the airfoil of the FIG. 7A undergoing a change in shape and size upon being exposed to a temperature change;
FIG. 8 depicts an exemplary method of modifying a surface of an article;
FIG. 9 depicts an exemplary embodiment of a valve that can be activated by a change in temperature or by a change in an electrical input;
FIG. 10 depicts an exemplary embodiment of a surface for controlling fluid flow, friction, hydrophobicity, or other desired properties;
FIG. 11 depicts an exemplary embodiment not according to the claimed invention of a prosthetic device that may be used as an exoskeleton; and
FIG. 12 depicts an exemplary embodiment not according to the claimed invention of a locking device that can be activated via an external stimulus.

### DETAILED DESCRIPTION

A detailed description of one or more embodiments of the disclosed apparatus and method are presented herein by way of exemplification and not limitation with reference to the Figures.

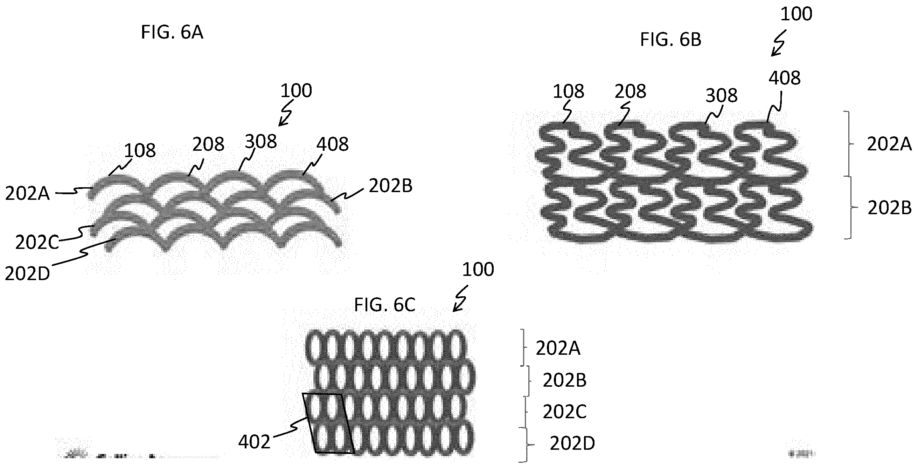

Fig.6A to 6C disclose examples of articles comprising a third portion to be used in the flow devices according to the claimed invention.

Disclosed herein are articles manufactured via additive manufacturing that comprise two portions that are in contact with one another, where each portion has a property that can act as a restraint on the same property displayed by the other portion. The article comprises composite units that contain structural units that comprise a first portion and a second portion that are in contact with one another. The structural units are repeat units that contain a third portion that is enclosed within the repeat unit and is compressible. The structural units may be periodic or aperiodic. The composite units may also be periodically or aperiodically arranged.

The article comprises a multi-metallic that contains a first portion, a second portion and a third portion. The multi-metallic may comprise two or more metals, three of more metals, four or more metals, and so on. The multi-metallic may have a shape interface between the two or more different metals. In another example, there may exist a gradient between the different metals that form the respective portions. In one example, the first portion and the second portion (which are in direct contact with one another) both have positive coefficients of thermal expansion but are arranged in such a manner such that the second portion can either absorb an expansion in the first portion to control a dimensional change in the article or alternatively, can restrict (i.e., act as a restraint on) a dimensional change in the first portion that prevents it from achieving its unrestricted value.

The third portion comprises a material that has a lower stiffness than that the materials used in the first portion and the second portion. The third portion may be in the form of a continuous matrix that contacts both the first portion and the second portion in each element (repeat unit) of the article. Not according to the claimed invention, the third portion may comprise isolated voids or partially isolated and non-isolated voids, where the voids contain a material that has a lower elastic modulus or a stiffness than the materials of the first portion and the second portion.

Not according to the claimed invention, the articles may be additively manufactured (AM) from a metallic material that may have gas-filled isolated voids or may comprise partially isolated and non-isolated voids (voids open to the surface). When this additively manufactured part is manufactured in a controlled environment, such as in a pressurized/vacuumed chamber, the voids may be filled with a gas of desired pressure. Removing the part from the pressurized/vacuumed chamber would result in some micro-structural (these are referred to as "repeat units" later in this document) deformation. In the case of an oval micro-structure, reduction in the ambient pressure would result in the micro-structure becoming closer to the circular shape (increasing its volume in response to relative pressure applied at both surface sides). The additively manufactured part with micro-structure would be sensitive to ambient pressure and temperature.

As noted above, the structural units may be manufactured from a bimetallic. The materials used in the first portion and the second portion can be bi-metallics. In other words, the first portion has a different coefficient of thermal expansion from the second portion. A bimetal comprises at least two metals. The first portion comprises a first metal, while the second portion comprises a second metal that has a different coefficient of thermal expansion from the first portion. The resulting composite therefore includes two metals that expand at different rates. Examples of the first metal includes copper, iron, aluminum, titanium, tantalum, gold, silver, molybdenum, tungsten, zirconium, platinum, cobalt, vanadium, nickel, or a combination thereof. The second metal can be selected from the aforementioned list but is different from the first metal.

In another example, the article may comprise a shape memory alloy. The first portion and the second portion include shape memory alloy compositions. Shape memory alloys exist in several different temperature-dependent phases. The most commonly utilized of these phases are the so-called martensite and austenite phases. In the following discussion, the martensite phase generally refers to the more deformable, lower temperature phase whereas the austenite phase generally refers to the more rigid, higher temperature phase. When the shape memory alloy is in the martensite phase and is heated, it begins to change into the austenite phase. The temperature at which this phenomenon starts is often referred to as austenite start temperature (As). The temperature at which this phenomenon is complete is called the austenite finish temperature (Af). When the shape memory alloy is in the austenite phase and is cooled, it begins to change into the martensite phase, and the temperature at which this phenomenon starts is referred to as the martensite start temperature (Ms). The temperature at which austenite finishes transforming to martensite is called the martensite finish temperature (Mf). Generally, the shape memory alloys are softer and more easily deformable in their martensitic phase and are harder, stiffer, and/or more rigid in the austenitic phase. **In** view of the foregoing properties, expansion of the shape memory alloy foam is preferably at or below the austenite transition temperature (at or below As). Subsequent heating above the austenite transition temperature causes the expanded shape memory foam to revert back to its permanent (preset) shape and dimensions. Thus, a suitable activation signal for use with shape memory alloys is a thermal activation signal having a magnitude to cause transformations between the martensite and austenite phases.

The temperature at which the shape memory alloy remembers its high temperature form when heated can be adjusted by slight changes in the composition of the alloy and through heat treatment. In nickel-titanium shape memory alloys, for instance, it can be changed from above about 100°C to below about -100° C. The shape recovery process occurs over a range of just a few degrees and the start or finish of the transformation can be controlled to within a degree or two depending on the desired application and alloy composition. The mechanical properties of the shape memory alloy vary greatly over the temperature range spanning their transformation, typically providing shape memory effects, super elastic effects and high damping capacity.

Suitable shape memory alloy materials for fabricating the first portion and the second portion include, but are not intended to be limited to, nickel-titanium based alloys, indium-titanium based alloys, nickel-aluminum based alloys, nickelgallium based alloys, copper based alloys (e.g., copper-zinc alloys, copper-aluminum alloys, copper-gold, and copper-tin alloys), gold-cadmium based alloys, silvercadmium based alloys, indium-cadmium based alloys, manganese-copper based alloys, iron-platinum based alloys, iron-palladium based alloys, and the like. The alloys can be binary, ternary, or any higher order so long as the alloy composition exhibits a shape memory effect, e.g., change in shape orientation, changes in yield strength, and/or flexural modulus properties, damping capacity, superelasticity, and the like. A preferred shape memory alloy is a nickel-titanium based alloy commercially available under the trademark NITINOL from Shape Memory Applications, Inc. Selection of a suitable shape memory alloy composition depends on the temperature range where the component will operate.

As noted above, the first portion has a different preset dimension from the second portion. When the structural unit is activated, the first portion and the second portion undergo a transformation between transformation between the martensite and austenite phases. Since the first portion has a different preset dimension (or shape) from the second portion, the activation causes the first portion to impose a restraining force (or an enhancing force) on the second portion, thus producing a change in the dimensions and/or shape of the structural unit from those dimensions and/or shape that the first portion and the second portion would have if they were not in contact with one another.

For example, if an article that comprises a first portion (with a positive coefficient of thermal expansion) in contact with a second portion (with a positive coefficient of thermal expansion too, but one that is higher than the coefficient of thermal expansion of the first portion) is subjected to an increase in temperature then the first portion can restrain the expansion of the second portion, leading to a change in shape of the article (or distortion of the article). This feature of a first portion acting as a restraint on a second portion (i.e., controlling the expansion of the second portion) may be used to design articles that can display a particular property in response to a change stimulus.

The article comprises a plurality of repeating structures (micro-structural units) each of which contains the structure detailed above, i.e., the first portion that controls at least one property of the second portion. The plurality of structural units contact one another in such a manner that the article can be made to expand, contract or remain with its dimensions unchanged upon experiencing a change in temperature or temperature gradient within it, or a combination thereof. The change in ambient conditions may include a change in temperature, pressure, environmental conditions such as the chemical environment, electrical or magnetic conditions, and the like. Each repeating structure generally comprises the first portion, the second portion and a third portion, which forms a matrix material. This will be detailed later.

Both the first portion and the second portion are arranged in their respective configurations via additive manufacturing. Additive manufacturing involves the addition of components to an existing structure thereby permitting special configurations that may not be available to other subtractive manufacturing processes (such as milling, grinding, drilling, and so on). Additive Manufacturing (AM)) is a computer-controlled sequential layering of materials to create three-dimensional shapes. A 3D digital model of the item is created, either by computeraided design (CAD) or using a 3D scanner.

While this disclosure only references articles that comprise a first portion and a second portion, it is understood that an article can comprise more than two portions that influence one another. An article can therefore comprise a plurality of different portions arranged in such a manner so as to restrain or enhance a particular property in a neighboring portion. The net result is that an article that comprises the first and second portions may expand, contract or remained unchanged in shape.

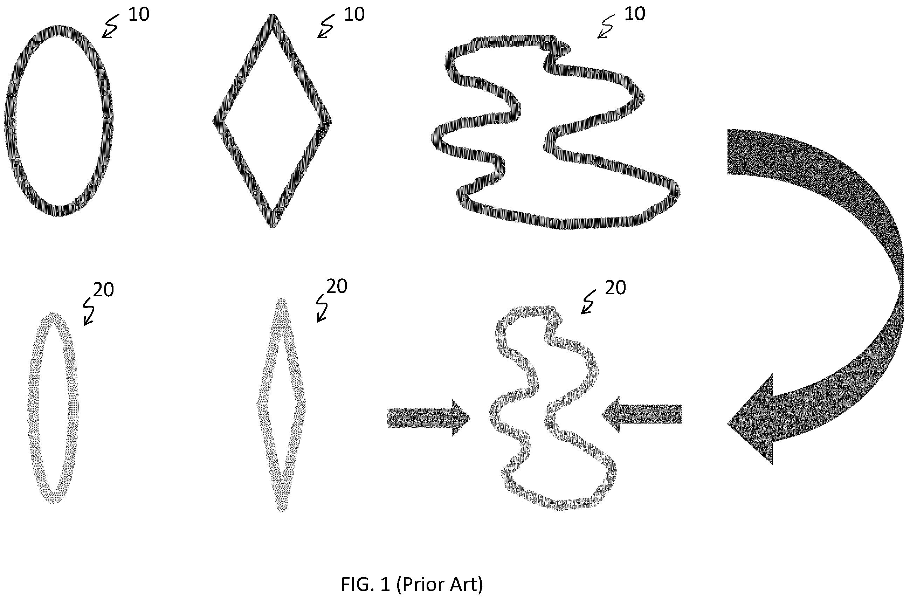

FIG. 1 is a prior art depiction of an article 10 that undergoes a change in dimensions upon being subjected to variable temperatures respectively. The article 10 is shown in three different shapes prior to being subjected to a temperature change. The article may comprise a bimetallic material or a single shape memory alloy (such as Nitinol 60). After being subjected to a temperature reduction, the article 10 (now article 20) is of a much smaller size. It goes back to its original size upon being subjected to an increase in temperature. This behavior however, can be advantageously utilized by combining sections of materials that have different original sizes so that when a composite material containing these different sections is subjected to a temperature change, the different sections either restrain or enhance one another to produce unexpected properties.

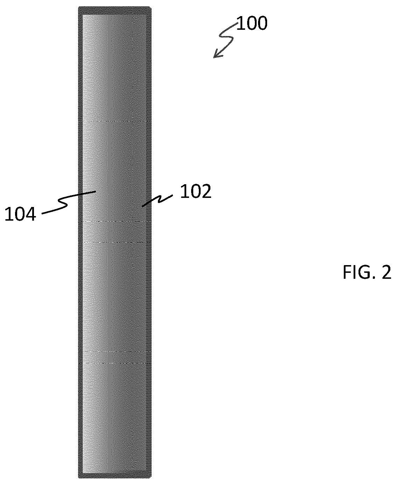

FIG. 2 depicts an article 100 that is manufactured via additive manufacturing using two portions - a first portion 102 and a second portion 104 that have at least one property where the first portion 102 restrains or enhances a particular behavior in the second portion 104. For example, the first portion 102 may have a positive coefficient of thermal expansion while the second portion 104 will have either a negative coefficient of thermal expansion or a lower positive coefficient of thermal expansion than that the first portion. A negative coefficient of thermal expansion is defined as one where a material undergoes contraction upon heating, rather than expansion (which is what a material with a positive coefficient of thermal expansion would do). In this particular example, the first portion 102 and the second portion 104 are in direct contact with one another. While this example details the first portion 102 and the second portion 104 as having opposing coefficients of thermal expansion, this does not always have to be the case. For example, the first portion 102 can have a much larger coefficient of thermal expansion than the second portion 104 or vice versa. In any event, one portion acts to restrain a given property in the other portion that is in contact with it when both portions are subjected to a change in their environment (e.g., a temperature change, a pressure change, a change in chemical environment, and so on).

As noted above, there may be a gradient in materials between the first portion and the second portion. In an example, the gradient may be a gradual changing in composition from the metal used in the first portion to the metal used in the second portion. In another example, the gradient may involve two or more step changes in composition from the metal used in the first portion to the metal used in the second portion. Gradients such as linear gradients, curvilinear gradients, and the like, are included herewith. The gradients prevent the delamination of different layers and phases from one another when subjected to varying temperatures. The gradients also facilitate a gradual response (as opposed to a sharp response) when the article is activated.

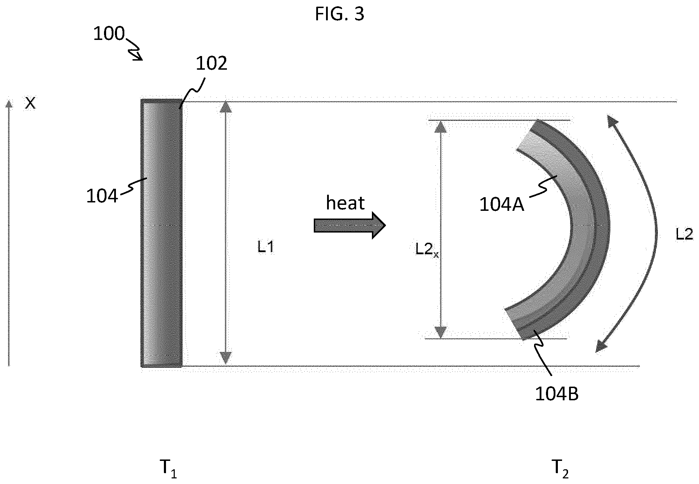

The FIG. 3 depicts the behavior of the article 100 of length L₁ (measured in the X direction) when it is subjected to a temperature increase to temperature T₂ (from an original temperature T₁). Upon being heated to the temperature T₂ (which is greater than T₁), the first portion 102 which has a positive coefficient of thermal expansion increases in length to a value of L₂ (which is greater than L₁), while the second portion 104, which has the negative coefficient of thermal expansion (or a coefficient of thermal expansion that is less than the coefficient of thermal expansion than the first portion 102) changes in length to a value of L₂ₓ, which is less than L₁. The second portion 104 which undergoes contraction (or expands less than the first portion) therefore restricts the expansion of the first portion 102 and vice versa. The net effect is that the curvature of the article 100 may be increased because the contracting second portion 104 acts as a restraining force on the expanding first portion 102.

In one example, by choosing the proper weight ratio of the first portion 102 to the second portion 104 and a proper geometry in which to combine with first portion with the second portion, the article can be designed to have no expansion (or contraction) or alternatively, to either expand or contract a desired amount. In another embodiment, by choosing the points of contact and location of the first portion 102 with the second portion, the article can be designed to have no expansion (or contraction) or alternatively, to either expand or contract a desired amount. In yet another embodiment, by choosing the proper weight ratio of the first portion 102 to the second portion 104 and by choosing the points of contact and location of the first portion 102 with the second portion, the article can be designed to have no expansion (or contraction) or alternatively, to either expand or contract a desired amount.

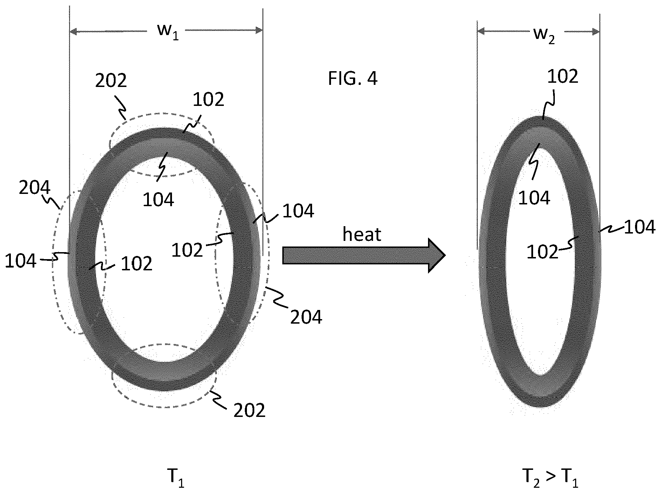

By combining several such first portions 102 with several second portions 104 at different locations as seen in the FIG. 4, the change in dimensions of the article 100 can be varies in response to changing temperatures. The FIG. 4 depicts an article 100 that contains 2 different combinations of the first portion 102 with the second portion 104. At the opposing poles 202 of the article 100, the first portion (having a positive coefficient of thermal expansion) 102 lies on the outer portion of the article 100, while the second portion 104 lies on the inner portion of the article 100. At the opposing equatorial regions 204, the first portion (having a positive coefficient of thermal expansion) 102 lies on the inner portion of the article 100, while the second portion 104 (having the negative coefficient of thermal expansion) lies on the outer portion of the article 100. The net effect of this combination (when the temperature is increased from temperature T₁ to temperature T₂) is to cause the curvature of the polar regions 202 to increase (i.e., the average radius of curvature decreases at the polar regions 202), while the curvature of the equatorial regions 204 decreases (i.e., the average radius of curvature increases at the equatorial regions 204). This combination of responses from the polar regions 202 and the equatorial regions 204 promotes a reduction in width w₁ of the article 100 to a width w₂.

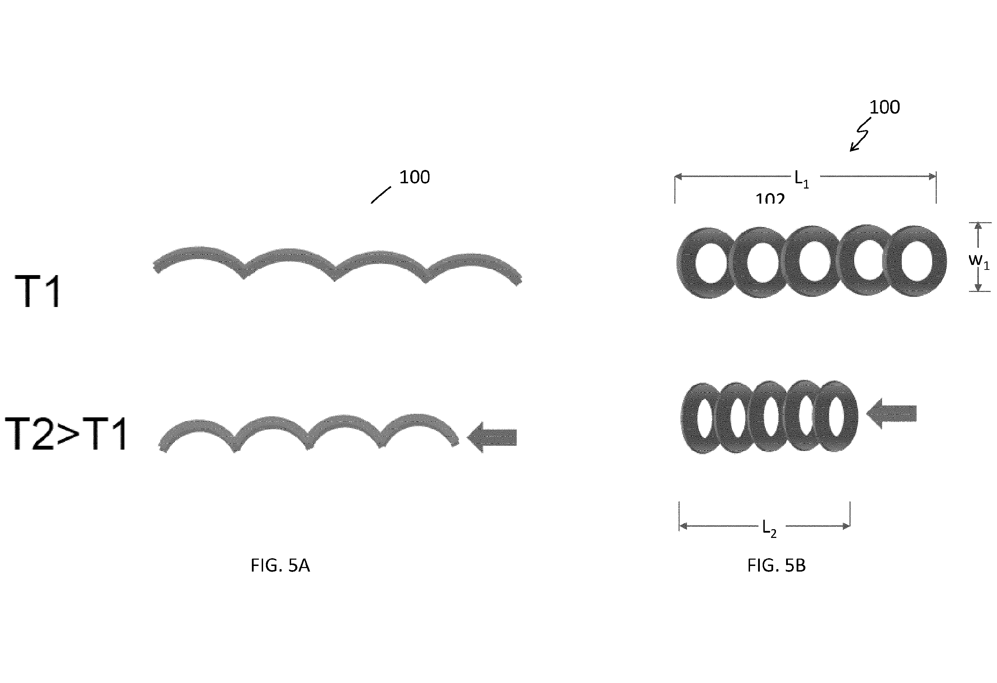

From the FIG. 4 it may be seen that by combining the first portion 102 and the second portion 104 in various manners, the size of the article may be increased, decreased or kept constant (in size and shape) with varying ambient environmental conditions (e.g., temperature, pressure, chemical environment, and the like). This is depicted in the FIG. 5A where an article 100 having a first portion 102 and a second portion 104 (both with positive coefficients of temperature expansion) decreases in size upon undergoing a temperature increase from T1 to T2. In the FIG. 5A, the first portion 102 is in the form of a semi-circle and contacts the second portion 104 (which has a lower coefficient of thermal expansion than the first portion 102) at its inner periphery (the first portion's inner periphery). A plurality of first portions 102 contact a plurality of second portions 104 along the inner periphery of the first portions 102.

In a normal situation, a material with a positive coefficient of temperature expansion) would expand upon experiencing an increase in temperature. In this particular case, the second portion 104 has a lower coefficient of temperature expansion than the first portion 102 and acts as a restraint on the expansion of the first portion 102 when the article 100 is subjected to a temperature increase. This restraint causes the article to shrink in length rather than increase as seen in the FIG. 5A. The curvature of each section of the article 100 however increases. Since a plurality of second portions 104 act to restrain a plurality of first portions 102, there is a cumulative effect on the decrease in length of the article, which is accompanied by an increase in the height "h₂" of the article (because of the increase in the curvature or each section of the article 100) from original height h₁.

A similar situation may be witnessed in the FIG. 5B, where a plurality of the articles (similar to article 100 of the FIG. 4) (also called repeated structural units) are in contact with one another. A plurality of articles 100 (e.g., 108, 208, 308, and so on) may be in contact with one another (e.g., bonded together). In the FIG. 5B, each article (e.g., 108) comprises a first portion 102 and a second portion 104 arranged in a manner similar to that of the FIG. 4. The second portion 104 may have a negative coefficient of temperature expansion, while the first portion 102 has a positive coefficient of temperature expansion. Alternatively, the second portion 104 may have a lower positive coefficient of thermal expansion than that of the first portion 102. When the temperature is increased from T₁ to T₂, each of the articles 108, 208, 308, and so on, changes shape from a circle to an ellipse. The combined length "L" of the article decreases from L₁ to L₂, while its width "W" increases from W₁ to W₂ with the increase in temperature.

From the FIG. 5A and 5B, it may be seen that the plurality of first portions and the plurality of second portions are never in continuous contact with one another. In other words, there is no domain (either of the first portion or of the second portion) that percolates through the entire mass of the article 100. The first portion and the second portion exist in the form of discrete domains throughout the mass of the article. Each portion retains its original properties even when formed into an article.

The FIGs. 4, 5A and 5B demonstrate that by combining different elements with different values (for a given particular property or for a plurality of properties) together, materials can be produced that display unexpected behavior when subjected to known changes in ambient conditions.

The first portion and the second portion detailed above in the FIGs. 2 - 5B may be placed in a desirable location with respect to each other via additive manufacturing. Additive manufacturing may be used to add domains of the first portion to the second portion in sizes of 10 micrometers to 20 millimeters, preferably 15 micrometers to 15 millimeters and more preferably 20 micrometers to 10 millimeters. This arrangement of domains may be used to produce materials that expand, contract or retain their original dimensionality upon being subjected to a change in ambient conditions. Changes in dimensionality or geometry can be controlled even when ambient conditions are changed.

With reference to the FIGS. 6A and 6B, the article 100 comprises repeated structural units 108, 208, 308, and so on, wherein each structural unit comprises the first portion 102 and the second portion 104. Each structural unit 100 contacts a neighboring unit at a point or at a surface. The repeated units act in concert with one another to expand, contract or to remain unchanged in size or shape when subjected to changing environmental conditions (e.g., temperature, pressure, chemical environment, electrical environment, and so on). These repeat units can extend in space in all directions and contain a third portion, which generally comprises a compressible material. The material that forms the third portion 110 is more compressible than the material that forms the first portion and the second portion. The repeat units can have long range order - i.e., they can uniformly extend throughout the material. On the other hand, they can be randomly distributed throughout the material. This is demonstrated in the FIGs. 6A, 6B and 6C.

The compressible material is an elastomer (e.g., polyisoprene, polybutadiene, nitrile rubber, and the like), that can undergo compression when the article 100 (comprising the first portion and the second portion) is subjected to changing environmental conditions. The compressible material permits the article to perform its function without any adverse effect on the components (the first portion and the second portion) of the article. The third portion forms a continuous path through the article 100

FIG. 6A depicts the article 100 where structural repeat units 108, 208, 308, 408, and so on, are combined in a random fashion to form a composite unit 202A. Each structural repeat unit 108, 208, 308, 408, and so on, contain a first portion 102 (not shown) and a second portion 104 (not shown) as detailed above. The structural repeat units 108, 208, 308, and so on are identical to each other and are periodically arranged in one direction. They are however, randomly distributed in a second direction. From the FIG. 6A, it may be seen that the troughs and crests of the composite units 202A, 202B, 202C and 202C do not align with each other in the article 100. As a result, the plurality of composite units 202A, 202B, 202C and 202D are randomly distributed within the article 100 in at least one direction.

FIG. 6B depicts an article 100, where each structural repeat unit 108, 208, 308, 408, and so on have random shapes. The structural repeat units 108, 208, 308, 408, and so on have random but identical shapes and are periodically distributed in at least one direction. In an example, the structural repeat units are periodically distributed in more than one direction. While the FIG. 6B shows the randomly shaped repeat units as having identical shapes, this may not always be the case. The neighboring random shapes may be different from one another if desired. In the FIG. 6B, the random shapes have a first portion 102 (not shown) and a second portion 104 (not shown) as detailed above. The first composite unit 202A is identical with the second composite unit 202B. In other words, the composite unit 202A translates itself uniformly in all directions across the volume of the article 100. FIG. 6C depicts an article 100 that comprises composite units 202A, 202B, 202C, 202D, and so on, where the repeat unit 402 translates uniformly across the volume of the article 100. In this example, the repeat unit periodically repeats itself in all directions. The repeat unit may or may not be the same as the composite unit.

In summary, the repeat units may be combined to form a composite unit. The repeat units may be periodically or aperiodically arranged. The composite units may also be periodically or aperiodically arranged.

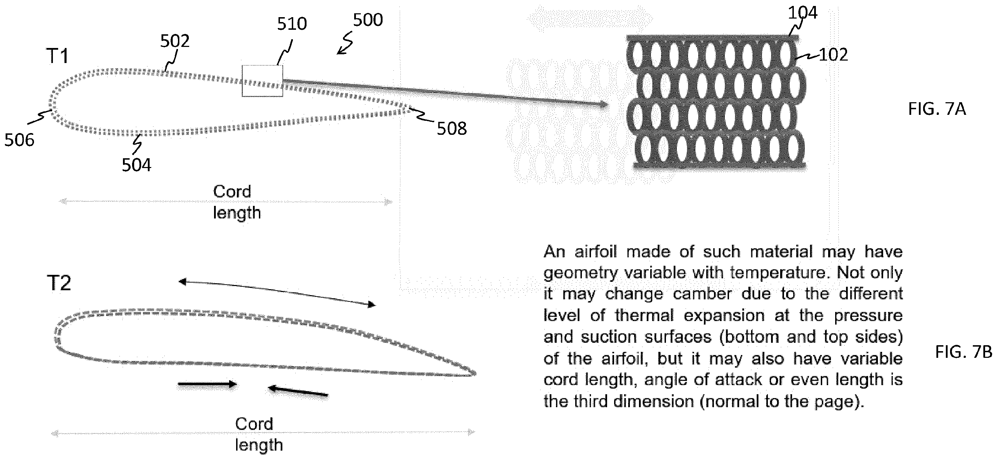

FIGs. 7A and 7B depict one exemplary application of the materials disclosed herein. FIG. 7A depicts an airfoil 500 that comprises the composite unit depicted in the FIG. 6C. The airfoil has a leading edge 506, a trailing edge 508, a pressure side 502 and a suction side 504. The section 510 depicts the composition of structure used in the pressure size 502. The composition comprises the first portion 102 and the second portion 104 arranged in such a manner such that upon the application of a temperature variation changes the length of the pressure side and the suction side (See FIG. 7B). However, the pressure side increases in length to a greater extent than the suction side. The composition of the suction side permits it to expand to an amount greater than the pressure side thus causing a change in the airfoil profile as seen in the FIG. 7B.

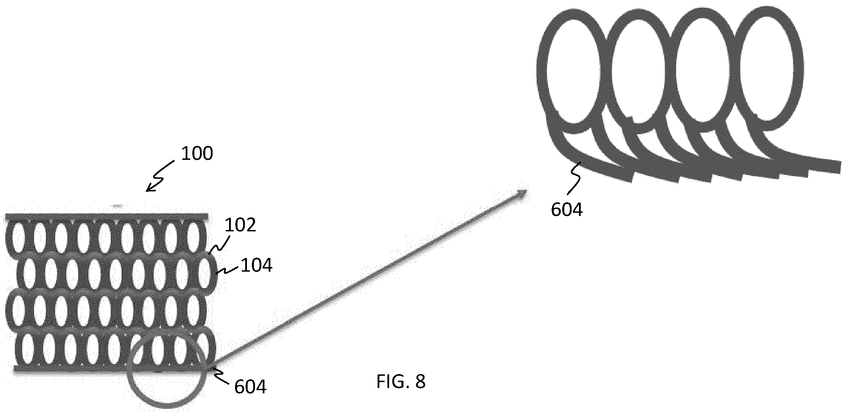

FIG. 8 depicts another application of the concept. The article 100 comprises a plurality of structural units 602 each of which comprises a tail 604. The respective tails contact each other to form a surface of the article 100. Here each structural unit is in communication with a tail. The plurality of structural units contains the first portion 102 (not shown) and the second portion 104 (not shown) as detailed above. The structural units will change shape (or dimensions) or remain unchanged when subjected to a change in ambient conditions. The tails 604 can therefore expand or contract (i.e., separate from one another or contact each other more intimately respectively) when the article is subjected to a change in ambient conditions. The change in the position of the tails 604 can change the surface texture of the article.

Materials used in the articles detailed herein can include shape memory alloys, shape memory polymers, materials having opposed coefficients of thermal expansion, materials having different thermal conductivities, and so on. The resultant articles can have zero thermal expansion or negative thermal expansion when temperature changes occur.

It is to be noted that the repeat units of the article may contain closed cell units (that close on themselves) or open cell units (that do not close on themselves). If the article comprises an open-cell inner structure, the inner core may always be at an ambient pressure and material would be insensitive to pressure changes. However, if that articles comprises a close-celled inner structure (each element has a closed volume that encompasses a third portion - where the third portion from adjacent repeat units is not in communication with each other), then its internal pressure may be not equal to the external pressure. In such case, the material becomes pressure, temperature or heat flux sensitive.

Articles that may contain the structures detailed herein include flow control devices (hot water, fire protection fuses), shape varying parts, high precision instruments, fluid conduits with no buildup, biomedical (joints, shunts), electric actuators, ambient conditions (pressure/temperature) controlled actuators, thermal equipment (heat exchangers).

Various applications of the invention will now be described.

### Flow Control Devices

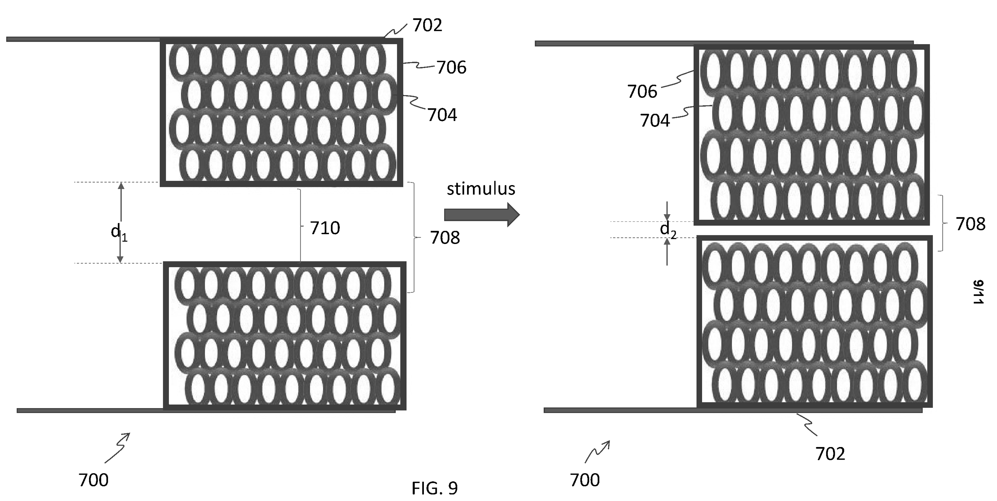

FIG. 9 depicts one exemplary embodiment of using the phenomena displayed in the FIGS. 3 - 6C to control the flow of fluid through a conduit 700. In this embodiment, the plurality of structural units are configured to function as a valve 708 that can permit fluid to flow through the conduit or stop its flow. Since the valve 708 is one where the cross-sectional area can be continuously adjusted, the valve 708 can also be used to control the rate of fluid flow. The conduit comprises a wall 702. The wall 702 may have a cross-section that is circular, square, rectangular, polygonal, triangular, or a combination thereof. Disposed along a wall 702 of the conduit 700 is a jaw 704 that forms the valve 708. The jaw 704 comprises the article as displayed in the FIGS. 3 and 6C, wherein the article comprises a first portion, a second portion and a third portion. The article can be activated by using a stimulus that causes the jaw 704 to expand or contract in proportion to the applied stimulus. The jaw 704 is disposed along the entire inner surface of the conduit and as a result can cause an opening to expand and contract.

The article comprises a skin 706 that surrounds the article. The skin 706 is impermeable to the fluid contained in the conduit. The skin is typically a polymer. The polymers are listed below. Upon application of a stimulus the jaws move closer to one another (or away from each other) thus changing the diameter of the flow area from d₁ to d₂ (or from d₂ to d₁), thus changing the volume of flow through the conduit. By applying the appropriate stimulus, the jaw 704 can be closed or opened thus stopping the flow of fluid or alternatively, allowing the fluid to flow through the conduit. The device shown in the FIG. 9 may be used in residential and commercial fire sprinkler systems for extinguishing fires.

Suitable organic polymers for use in the skin include a wide variety of thermoplastic polymers, blend of thermoplastic polymers, thermosetting polymers, or blends of thermoplastic polymers with thermosetting polymers. The organic polymer may also be a blend of polymers, copolymers, terpolymers, or combinations comprising at least one of the foregoing organic polymers. The organic polymer can also be an oligomer, a homopolymer, a copolymer, a block copolymer, an alternating block copolymer, a random polymer, a random copolymer, a random block copolymer, a graft copolymer, a star block copolymer, a dendrimer, a polyelectrolyte (polymers that have some repeat groups that contain electrolytes), a polyampholyte (a polyelectrolyte having both cationic and anionic repeat groups), an ionomer, or the like, or a combination thereof. The organic polymers have number average molecular weights greater than 10,000 grams per mole, preferably greater than 20,000 g/mole and more preferably greater than 50,000 g/mole.

Exemplary organic polymers include polyacetals, polyacrylics, polycarbonates, polyalkyds, polystyrenes, polyolefins, polyesters, polyamides, polyaramides, polyamideimides, polyarylates, polyurethanes, epoxies, phenolics, silicones, polyarylsulfones, polyethersulfones, polyphenylene sulfides, polysulfones, polyimides, polyetherimides, polytetrafluoroethylenes, polyetherketones, polyether ether ketones, polyether ketone ketones, polybenzoxazoles, polyoxadiazoles, polybenzothiazinophenothiazines, polybenzothiazoles, polypyrazinoquinoxalines, polypyromellitimides, polyguinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, polypropylenes, polyethylenes, polyethylene terephthalates, polyvinylidene fluorides, polysiloxanes, or the like, or a combination thereof.

The flow control devices may be used to control hot water flow and in fire protection fuses.

### Dynamically Changing Surface Texture

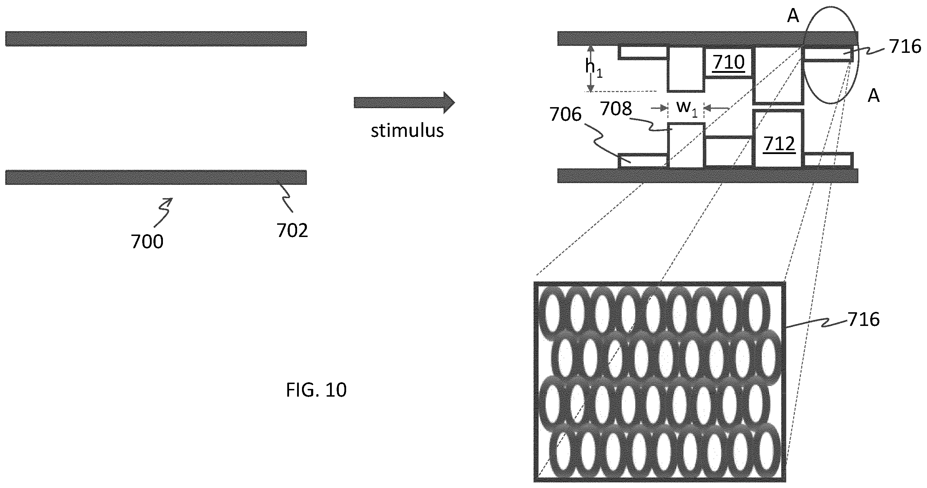

FIG. 10 depicts one embodiment of a conduit 700 having walls 702 where the texture of the inner surface can be dynamically changed to convert the surface from a smooth surface to a rough surface. This has a number of advantages. By changing surface texture, a surface can be changed from hydrophilic to hydrophobic or from frictional to non-frictional. For example, in a conduit the flow can be changed from laminar to turbulent. While the FIG. 9 depicts a conduit, this mechanism of surface modification can be applied to flat surfaces (not shown).

In the FIG. 10, the inner surface of the conduit wall 702 is modified to contain a plurality of sections 706, 708, 710, 712, 714 and 716 each of which contain the article described in the FIGS. 3 to 6C. An expanded view of the article is shown in section AA in the FIG. 9. Each section can be activated to a different height h1 and width w1 thus converting a smooth surface to a rough surface. The height h1 can be varies from 0.5 micrometer to 100 micrometers and the width w1 can be varied from 0.5 to 100 micrometers. While the plurality of sections 706, 708, 710, 712, 714 and 716 can be seen to be in contact with one another in the FIG. 9, they can be periodically or aperiodically spaced apart.

The changing of the surface texture can be initiated by using an activating stimulus. The activating stimulus can be a change in temperature or a change in an electrical current or field. Other stimulus such as a change in chemical environment or a change in the acoustic environment can also be used to change the surface texture. The change in surface texture on the inner surface of a conduit may be used to change fluid flow in the conduit from laminar to turbulent.

On flat surfaces such as runways, the hydrophobicity of the surface may be gradually changed. Frictional surfaces can be changed to non-frictional and vice versa. The change can be variable depending upon the magnitude and direction of the applied activating stimulus.

Each of the sections shown in the FIG. 10 is coated with skin (not shown) similar to that seen in the FIG. 9. The skins are manufactured from a polymer. The polymers are listed above and will not be repeated again in the interests of brevity.

This modifying of surface texture may be conducted dynamically. By changing the activation energy, the surface can be changed in real time to modify the surface properties and texture. They can be used in shape varying parts, high precision instruments and in fluid conduits to prevent buildup.

### Prosthetics and Exo-Skeletons

In this application not according to the claimed invention, the rigidity of a device that (contains the article) may be changed by the application of a stimulus. By changing the rigidity of a device, the amount of support for a part of the body (of a living being) can be varied. This permits the device to be used as a cast (to mend a limb when it is sprained or fractured) or to serve as an exo-skeleton (to help a soldier in the battlefield carry a greater load).

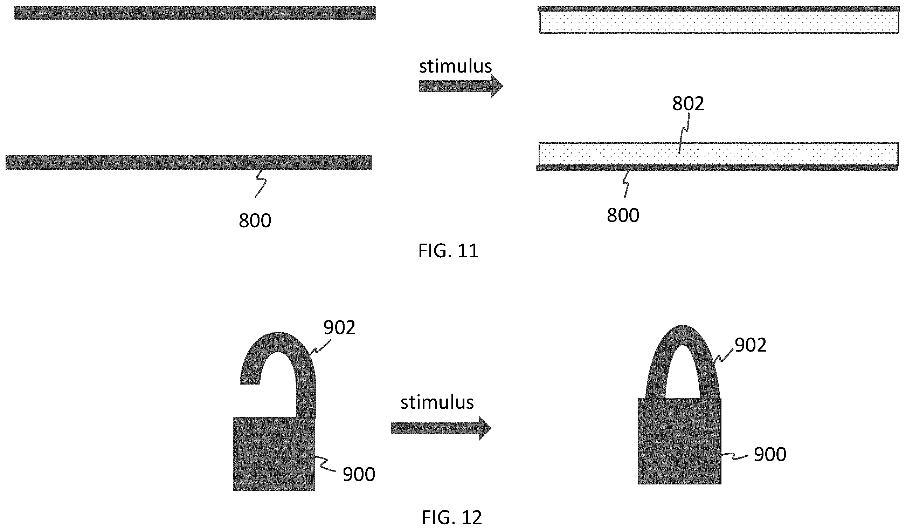

FIG. 11 depicts an embodiment not according to the claimed invention of a flexible sleeve 800 that contains a plurality of articles 802 on its inner surface. The articles in their contracted state prevent the sleeve from being rigid. However, upon activation, the articles can expand thus increasing the rigidity of the sleeve. This increase in rigidity can facilitate supporting damaged bones and tissue in the body of a living being. At the same time, the sleeve 800 can be loosened for removal from the body in the event that a patient needs relief from having the prosthetic wrapped around a limb. The article present in the sleeve functions in a manner similar to that described in the FIGS. 3 to 6C.

**In** addition, broken bones can be mended with shape memory alloys using the invention described in FIGS. 3 to 6C. The alloy plate has a memory transfer temperature that is close to body temperature and is attached to both ends of the broken bone. The body heat causes the plate to contract and retain its original shape, therefore exerting a compression force on the broken bone at the place of fracture. This invention can be used in biomedical joints and shunts.

### Locking devices

Not according to the claimed invention, the article depicted in the FIGS. 3 to 6C may also be used in a locking device (not shown). In an embodiment not according the claimed invention, it may be used in locking devices where a timed opening or closing is desired. The timed closing of the lock may be achieved using an activating stimulus that facilitates gradual closing or opening of the lock. The lock will therefore not open instantaneously but will open gradually depending upon the input signal, which is chosen by an operator. This is helpful in banks, bank safes, jewelry stores, and the like, where theft or vandalism is a problem.

FIG. 12 depicts a lock body 900 with a fastener 902 that can be activated using heat or electricity to contact the lock body 900. When heat is applied to the lock body 900 the article contained in the fastener 902, the lock body 900 or both the fastener 902 and the lock body 900 may be used to facilitate a timed closing of the lock.

The principle used in the manufacture of locking devices may also be used in electric actuators and ambient condition (pressure/temperature) controlled actuators.

### Aviation blades

Performance for helicopter blades depend on vibrations. The article disclosed in the FIGS. 3 to 6C may be used in control tabs for the trailing ends of the blades. The metals used in this application can be shape memory alloys. This permits pilots to fly with increased precision.

Not according to the claimed invention, articles manufactured by this method can include cylinders and pistons used for internal combustion engines, shrouds, gears, casings, rotors, crankshafts, gears, bearing components and other precision equipment and machinery.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the invention as defined by the claims.

## Claims

1. A flow control device comprising:
a conduit (700); and
jaws (704) lining an inner surface of the conduit; where the jaws comprise:
a plurality of structural units (108, 208, 308, 408), wherein each structural unit comprising:
a first portion (102);
a second portion (104); wherein the second portion contacts the first portion; and
a third portion; wherein the third portion is an elastomer material that is in communication with the first portion and the second portion, is more compressible than the first portion and the second portion, and forms a continuous path through the structural unit; where the first portion has a first value of a property and where the second portion has a second value of the same property, such that the first value acts as a restraining or enhancing force on the second value; wherein the first portion comprises a first metal and wherein the second portion comprises a second metal that is different from the first metal; wherein the jaws are operative to vary a cross-sectional area of fluid flow in the conduit; where the plurality of structural units forms a repeat unit (402) and wherein the jaws are encompassed in a polymer (706).

2. The flow control device of Claim 1, wherein the repeat unit repeats itself throughout a volume of an article.

3. The flow control device of Claim 1 or 2, wherein the plurality of structural units is periodically spaced.

4. The flow control device of any preceding Claim, wherein the first portion and the second portion each have domain sizes ranging from 10 micrometers to 20 millimeters and are placed in position using additive manufacturing.

5. The flow control device of any preceding Claim, wherein the first portion and the second portion both comprise a single shape memory alloy.

6. A flow control device comprising:
a planar or curved surface having a base surface;
a plurality of sections, wherein each section comprises;
a first portion (102);
a second portion (104); wherein the second portion contacts the first portion; and
a third portion; wherein the third portion is an elastomer material that is in communication with the first portion and the second portion, is more compressible than the first portion and the second portion, and forms a continuous path through the section;
where the first portion has a first value of a property and where the second portion has a second value of the same property, such that the first value acts as a restraining or enhancing force on the second value; wherein the first portion comprises a first metal and wherein the second portion comprises a second metal that is different from the first metal; where the plurality of sections are operative to undergo a change in height from the base surface; and wherein the plurality of sections are covered by a polymer.

7. The flow control device of Claim 6, wherein the planar or curved surface can change from hydrophobic to hydrophilic or vice versa and/or wherein a frictional property of the planar or curved surface can be changed upon the application of a stimulus.

## Patentansprüche

1. Durchfluss-Kontrollgerät, umfassend:
eine Leitung (700); und
Backen (704), die eine innere Oberfläche der Leitung auskleiden;
wobei die Backen Folgendes umfassen:
eine Vielzahl von Struktureinheiten (108, 208, 308, 408), wobei jede Struktureinheit Folgendes umfasst:
einen ersten Abschnitt (102);
einen zweiten Abschnitt (104); wobei der zweite Abschnitt den ersten Abschnitt berührt; und
einen dritten Abschnitt; wobei der dritte Abschnitt ein Elastomermaterial ist, das mit dem ersten Abschnitt und dem zweiten Abschnitt in Verbindung steht, komprimierbarer als der erste Abschnitt und der zweite Abschnitt ist und einen durchgehenden Pfad durch die Struktureinheit bildet; wobei der erste Abschnitt einen ersten Wert einer Eigenschaft aufweist und wobei der zweite Abschnitt einen zweiten Wert derselben Eigenschaft aufweist, sodass der erste Wert als eine hemmende oder verstärkende Kraft auf den zweiten Wert wirkt; wobei der erste Abschnitt ein erstes Metall umfasst und wobei der zweite Abschnitt ein zweites Metall umfasst, das sich von dem ersten Metall unterscheidet; wobei die Backen funktionsfähig sind, um eine Querschnittsfläche eines Fluidstroms in der Leitung zu variieren; wobei die Vielzahl von Struktureinheiten eine Wiederholungseinheit (402) bildet und wobei die Backen in einem Polymer (706) eingeschlossen sind.

2. Durchfluss-Kontrollgerät nach Anspruch 1, wobei die Wiederholungseinheit sich durch ein Volumen eines Gegenstands hindurch wiederholt.

3. Durchfluss-Kontrollgerät nach Anspruch 1 oder 2, wobei die Vielzahl von Struktureinheiten periodisch beabstandet ist.

4. Durchfluss-Kontrollgerät nach einem der vorhergehenden Ansprüche, wobei der erste Abschnitt und der zweite Abschnitt jeweils Domänengrößen in einem Bereich von 10 Mikrometern bis 20 Millimetern aufweisen und unter Verwendung von additiver Fertigung in Position gebracht sind.

5. Durchfluss-Kontrollgerät nach einem der vorhergehenden Ansprüche, wobei der erste Abschnitt und der zweite Abschnitt beide eine einzige Formgedächtnislegierung umfassen.

6. Durchfluss-Kontrollgerät, umfassend:
eine ebene oder gekrümmte Oberfläche, die eine Basisoberfläche aufweist;
eine Vielzahl von Bereichen, wobei jeder Bereich umfasst;
einen ersten Abschnitt (102);
einen zweiten Abschnitt (104); wobei der zweite Abschnitt den ersten Abschnitt berührt; und
einen dritten Abschnitt; wobei der dritte Abschnitt ein Elastomermaterial ist, das mit dem ersten Abschnitt und dem zweiten Abschnitt in Verbindung steht, komprimierbarer als der erste Abschnitt und der zweite Abschnitt ist und einen durchgehenden Pfad durch den Bereich bildet; wobei der erste Abschnitt einen ersten Wert einer Eigenschaft aufweist und wobei der zweite Abschnitt einen zweiten Wert derselben Eigenschaft aufweist, sodass der erste Wert als eine hemmende oder verstärkende Kraft auf den zweiten Wert wirkt; wobei der erste Abschnitt ein erstes Metall umfasst und wobei der zweite Abschnitt ein zweites Metall umfasst, das sich von dem ersten Metall unterscheidet; wobei die Vielzahl von Bereichen funktionsfähig ist, um eine Änderung der Höhe ausgehend von der Basisoberfläche zu durchlaufen; und wobei die Vielzahl von Bereichen von einem Polymer bedeckt ist.

7. Durchfluss-Kontrollgerät nach Anspruch 6, wobei die ebene oder gekrümmte Oberfläche von hydrophob zu hydrophil oder umgekehrt wechseln kann und/oder wobei eine Reibungseigenschaft der ebenen oder gekrümmten Oberfläche bei der Anwendung eines Stimulus geändert werden kann.

## Revendications

1. Dispositif de contrôle de débit comprenant :
un conduit (700) ; et
mâchoires (704) tapissant une surface intérieure du conduit ;
les mâchoires comprenant :
une pluralité d'unités structurelles (108, 208, 308, 408), chaque unité structurelle comprenant :
une première partie (102) ;
une deuxième partie (104) ; la deuxième partie étant en contact avec la première partie ; et
une troisième partie ; la troisième partie étant un matériau élastomère en communication avec la première partie et la deuxième partie, étant plus compressible que la première partie et la deuxième partie, et formant un chemin continu à travers l'unité structurale ; la première partie présentant une première valeur d'une propriété et la deuxième partie présentant une deuxième valeur de la même propriété, de telle façon que la première valeur agit comme une force de retenue ou d'amplification sur la deuxième valeur ; la première partie comprenant un premier métal et la deuxième partie comprenant un deuxième métal qui est différent du premier métal ; les mâchoires étant opérationnelles pour faire varier une section transversale d'écoulement de fluide dans le conduit ; la pluralité d'unités structurales formant une unité de répétition (402) et les mâchoires étant enrobées d'un polymère (706).

2. Dispositif de contrôle de débit selon la revendication 1, dans lequel l'unité de répétition se répète dans tout un volume d'un article.

3. Dispositif de contrôle de débit selon la revendication 1 ou 2, dans lequel la pluralité d'unités structurelles est espacée périodiquement.

4. Dispositif de contrôle de débit selon toute revendication précédente, dans lequel la première partie et la deuxième partie ont chacune des tailles de domaine allant de 10 micromètres à 20 millimètres et sont placées en position à l'aide de la fabrication additive.

5. Dispositif de contrôle de débit selon toute revendication précédente, dans lequel la première partie et la deuxième partie comprennent toutes deux un seul alliage à mémoire de forme.

6. Dispositif de contrôle de débit comprenant :
une surface plane ou courbe présentant une surface de base ;
une pluralité de sections, chaque section comprenant ;
une première partie (102) ;
une deuxième partie (104) ; la deuxième partie étant en contact avec la première partie ; et
une troisième partie ; la troisième partie étant un matériau élastomère en communication avec la première partie et la deuxième partie, étant plus compressible que la première partie et la deuxième partie, et formant un chemin continu à travers l'unité structurale ; la première partie présentant une première valeur d'une propriété et la deuxième partie une deuxième valeur de la même propriété, de telle façon que la première valeur agit comme une force de retenue ou d'amplification sur la deuxième valeur ; la première partie comprenant un premier métal et la deuxième partie comprenant un deuxième métal qui est différent du premier métal ; la pluralité de sections étant opérative pour subir un changement de hauteur à partir de la surface de base ;
et la pluralité de sections étant couvertes par un polymère.

7. Dispositif de contrôle de débit selon la revendication 6, dans lequel la surface plane ou courbe peut passer d'hydrophobe à hydrophile ou vice versa et/ou dans lequel une propriété de friction de la surface plane ou courbe peut être modifiée lors de l'application d'un stimulus.
